# EUROPÄISCHE PATENTANMELDUNG

(11) **EP 1 265 184 A2**
(43) Veröffentlichungstag der Anmeldung: **11.12.2002**
(21) Anmeldenummer: 02450089.4
(22) Anmeldetag: 15.04.2002
(51) Int. Cl.: G06F 17/60

(54) **Verfahren zum elektronischen Bezahlen**

(30) Priorität: 11.05.2001 AT 7582001
(71) Anmelder: Siemens AG Österreich, 1210 Wien (AT)
(72) Erfinder: Allinger, Erich, 3494 Gedersdorf (AT); Kastner, Rainer, 1100 Wien (AT)
(74) Vertreter: Matschnig, Franz, Dipl.-Ing.

(57) **Zusammenfassung**

Bei einem Verfahren zum elektronischen Bezahlen wird in einem ersten Schritt einem Käufer (CUS) ein elektronischer Kaufvertrag (ecq) übermittelt, der zumindest von dem Käufer (CUS) digital signiert wird, um anschließend an eine Abrechnungsstelle (VBA) übermittelt zu werden. Zweckmäßigerweise enthält dabei der Vertrag (ecq) zumindest Informationen betreffend den zu bezahlenden Betrag und weiters zumindest Informationen betreffend zumindest eine Bezahlungsmodalität. Bei einer Ausführungsform der Erfindung wird dabei der zumindest von dem Käufer (CUS) signierte Vertrag (ecq, sig) vorerst wieder an den Verkäufer (SEL) und von diesem in einem abgesetzten Schritt an die Abrechnungsstelle (VBA) übermittelt.

## Beschreibung

Die Erfindung betrifft ein Verfahren zum elektronischen Bezahlen.

Mit der zunehmenden Verbreitung des Internets und der großen Anzahl von Benutzern ist bei vielen Firmen etc. auch das Interesse an einem Verkaufen von Produkten, Dienstleitungen etc. über das Internet gewachsen. Diesem sogenannten "e-commerce" wurden und werden immer wieder enorme Zuwachszahlen vorausgesagt, dennoch sieht die Realität dermaßen aus, dass die Möglichkeit des e-commerce von vielen Firmen nur ungern oder gar nicht angeboten wird und auch für viele Benutzer die Hemmschwelle für eine Bestellung von Waren über das Internet oftmals sehr groß ist.

Momentan leidet die Entwicklung des e-commerce an mehreren Punkten, insbesondere hinsichtlich der Modalitäten betreffend die Bezahlung der Waren etc. Eine einfache Möglichkeit dafür, nämlich die Bezahlung mittels Kreditkarte, wird von den Benutzern nicht gerne verwendet, da diese Bezahlungsvariante für viele zu unsicher ist und die Kreditkartendaten leicht bei dem Übertragungsvorgang im Internet von nicht Berechtigten ausgeforscht werden können. Lastschriftverfahren bergen eine Unsicherheit für den Verkäufer, da der Käufer leicht das Geld wieder rückbuchen oder auch das Konto nicht gedeckt sein kann.

In nächster Zukunft werden im gesamten Raum der europäischen Union sogenannte Signatur-Chipkarten ausgegeben. Mit diesen Chipkarten wird das rechtsgültige Unterzeichnen von Dokumenten, wie beispielsweise Verträgen, möglich. Entsprechend der Gesetzeslage darf mit diesen Signatur-Chipkarten nur eine Signierung von Dokumenten vorgenommen werden. Für eine direkte bargeldlose Bezahlung dürfen die auf diesen Chipkarten gespeicherten Signaturzertifikate nicht verwendet werden.

Es ist eine Aufgabe der Erfindung, ein Verfahren zur bargeldlosen Bezahlung unter Verwendung von Signatur-Chipkarten aufzuzeigen, wodurch auch die Nachteile etwa des Bezahlens mit Kreditkarte behoben werden.

Diese Aufgabe wird mit einem eingangs erwähnten Verfahren dadurch gelöst, dass erfindungsgemäß
a) einem Käufer ein elektronischer Kaufvertrag übermittelt wird,
b) der elektronische Vertrag zumindest von dem Käufer digital signiert wird, und
c) der so signierte Vertrag an eine Abrechnungsstelle übermittelt wird.

Vorteilhafterweise enthält dabei der Vertrag zumindest Informationen betreffend den zu bezahlenden Betrag, und weiters ist es auch noch günstig, wenn der Vertrag zumindest Informationen betreffend zumindest eine Bezahlungsmodalität enthält.

Gemäß der Erfindung wird somit zwischen einem Anbieter (Verkäufer) und einem Käufer bei der "Bezahlung" ein rechtsgültiger Vertrag geschlossen und nicht nur lediglich eine Lastschrift erzeugt. Dieser rechtsgültige Vertrag ist auch jederzeit einklagbar. Jeder Benutzer, der über eine solche Signaturkarte verfügt, kann mit dem erfindungsgemäßen Verfahren auf einfache Weise bargeldlos, beispielsweise über das Internet, aber auch an Kassen ("Point of Sales") bezahlen.

### Ablauf bei Kassensystemen

Bei solchen Kassensystemen wird parallel zum Rechnungszettel ein elektronischer Vertrag generiert und an eine Signatureinheit gesendet. Der zu bezahlende Betrag wird am Display der Signatureinheit angezeigt, der Kunde steckt seine Chipkarte, gibt seine PIN ("Personen Identifikationsnummer") ein und signiert somit rechtsgültig den Kaufvertrag. Der zu bezahlende Betrag wird am Display der Signatureinheit angezeigt. Dieser signierte Vertrag wird an das Kassensystem zurückgegeben und von dort über Leitung, beispielsweise über das Internet, an die Abrechnungsstelle - im folgenden auch "Paymentgateway" - gesendet, wo on-line die entsprechenden Prüfungen ablaufen und anschließend die entsprechende Transaktion angestoßen wird.

### Ablauf im Internet

Beispielsweise kann ein Interessent über ein Internet-Angebot auf einer entsprechenden WEB-Page Waren bestellen; er bekommt dann unmittelbar einen entsprechenden elektronischen Kaufvertrag zugeschickt, etwa per e-mail, es kann aber auch sein, dass dieser Vertrag von Verkäuferseite unmittelbar generiert und dann zum Herunterladen für den potenziellen Käufer angeboten wird. Mit entsprechender Software von Verkäuferseite kann dabei auch die Erzeugung des Vertrages elektronisch erfolgen.

Nachdem der Vertrag bei dem Käufer eingelangt und von diesem signiert ist, kann er den Vertrag unmittelbar an die Abrechnungsstelle übermitteln.

Bei einer vorteilhaften Ausführungsform der Erfindung wird dabei der zumindest von dem Käufer signierte Vertrag nach Schritt b) an den Verkäufer und von diesem in Schritt c) an die Abrechnungsstelle übermittelt. Auf diese Weise verfügt der Verkäufer bereits über den rechtsgültig unterschriebenen Vertrag und kann beispielsweise die Weiterleitung der bestellten Waren an den Käufer veranlassen. Nach dem Übermitteln des Vertrages durch den Verkäufer an die Abrechnungsstelle werden von dieser die Zahlungsvorgänge automatisch ausgelöst. Aus der Sicht des Benutzers kann somit der Bezahlungsvorgang in kurzer Zeit mit nur wenigen "Tasten-" oder "Mausklicks" sicher und rechtsgültig abgeschlossen werden.

Der Vertrag enthält Informationen über die Bezahlungsmodalitäten des Käufers, beispielsweise eine Kontonummer (Bankverbindung), oder Informationen für die Bezahlung über Kreditkarte, Lastschrift oder ein anderes Bezahlungsverfahren. Des weiteren enthält der Vertrag beispielsweise noch die Kontonummer (Bankverbindung) des Verkäufers, wodurch der entsprechende Betrag von dem Kundenkonto auf das Verkäuferkonto überwiesen werden kann. Über die Bezahlungsmodalität kann in der Abrechnungsstelle die entsprechende Zuordnung erfolgen und die Bezahlung veranlasst werden. Die Transaktion der Aufund Abbuchungen wird direkt von den betreffenden Banken des Käufers und Verkäufers durchgeführt.

Grundsätzlich ist eine Übermittlung des elektronischen Vertrages zwischen einem Anbieter und dem Käufer auf beliebige Art und Weise möglich, beispielsweise auch auf einem Datenspeicher wie einer Diskette oder einer CD-ROM. Besonders vorteilhaft und effizient, weil zeitsparend kann das erfindungsgemäße Verfahren allerdings dann eingesetzt werden, wenn die Übermittlung des Vertrages zu dem Käufer und/oder die Übermittlung des signierten Vertrages an die Abrechnungsstelle (Paymentgateway) über Datenleitungen durchgeführt wird. Wird dabei der Vertrag on-line über Datenleitungen, beispielsweise über das Internet, verschickt, so können von jeder im Prozess beteiligten Partei entsprechende Prüfungen des Vertrages vorgenommen werden, sodass am Ende ein rechtsgültig geprüfter Kaufvertrag vorliegt.

Von besonderer Wichtigkeit ist, dass jeder signierte Vertrag einmalig ist, sodass eine mehrmalige Einlösung nicht möglich ist. Dazu wird bei dem erfindungsgemäßen Verfahren vor Schritt b) der elektronische Vertrag mit einer einmaligen, eindeutigen Kennung versehen. Taucht ein Duplikat eines bereits "eingelösten" Vertrages auf, so wird dieses von der Abrechnungsstelle erkannt und mit dem Duplikat können keine weiteren Bezahlungen veranlasst werden.

Bei einer konkreten Ausführungsform der Erfindung wird als Kennung ein elektronischer Zeitstempel verwendet, welcher dem elektronischen Vertrag beigefügt wird.

Beispielsweise kann der Zeitstempel von einer zentralen "Time-Stamp-Authority" erzeugt und anschließend dem Kaufvertrag beigefügt werden. Bei einer solchen "Time-Stamp-Authority" handelt es sich um eine Institution ähnlich den sogenannten "Trust-Centern", die für die Ausgabe, Verwaltung und Überprüfung von Zertifikaten für Signaturen zuständig sind, mit dem Unterschied, dass diese "Time-Stamp-Authorities" sich um die Erzeugung und Vergabe von Zeitstempeln kümmern.

Üblicherweise erfolgt in diesem Fall die Beifügung eines eindeutigen Zeitstempels so, dass der Kaufvertrag an die Time-Stamp-Authority ("TSA") vorzugsweise über eine Datenleitung übermittelt, von dieser der Zeitstempel beigefügt und der Vertrag dann an den Käufer bzw. Verkäufer rückgesendet wird. Dabei ist zu beachten, dass ein Zeitstempel bzw. eine eindeutige Kennung sowohl von Käufer- als auch von Verkäuferseite dem elektronischen Vertrag beigefügt werden können. Damit während des Übertragungsvorganges keine Manipulationen des Vertrages stattfinden können bzw. solche Manipulationen erkannt werden, wird der Kaufvertrag einerseits von dem Käufer vor dem Absenden signiert, sodass an Hand entsprechender Zertifikate die TSA verifizieren kann, dass der Vertrag tatsächlich von dem angegebenen Käufer bzw. Verkäufer stammt, dessen Zertifikat und Signatur gültig sind und auch nicht während der Übertragung verändert wurde. Anschließend wird der Kaufvertrag an die "Time-Stamp-Authority" übermittelt, und nach erfolgter Zeitstempelung wiederum mit einer Signatur - jetzt von der TSA - versehen an den Käufer bzw. Verkäufer rückübersendet, sodass nun auch der Käufer oder Verkäufer verifizieren kann, woher der "gestempelte" Vertrag stammt und sicher sein kann, dass der Vertrag nicht verändert wurde.

Grundsätzlich können der oder die zur Erzeugung einer digitalen Signatur notwendigen Schlüssel auf einem beliebigen Datenträger gespeichert sein, auch auf einer Festplatte oder Diskette. Allerdings ist es vorteilhaft und auf Grund der Gesetzeslage in vielen Ländern sogar notwendig, dass zur Erzeugung der digitalen Signatur eine Speicherkarte, insbesondere eine Chipkarte verwendet wird, auf welcher die entsprechenden Schlüssel etc. abgelegt sind. Diese Karte kann zusätzlich durch einen sogenannten PIN-Code ("Personen-Identifikations-Nummer") gegen eine missbräuchliche Verwendung geschützt werden.

Bei einer weiteren, konkreten Ausführungsform wird nun für die Erzeugung des Zeitstempels eine Signierungseinheit, beispielweise ein Kartenlesegerät - bei dem es sich exakt gesprochen um ein Gerät zur Erzeugung einer Signatur unter Verwendung einer Signatur-Chipkarte handelt - für die Speicher- bzw. Chipkarte verwendet. Beispielsweise verfügen die wenigsten Personalcomputer über ein eigenes Kartenlesegerät für solche Speicher/Chipkarten. Eine daher notwendige externe Signierungseinheit kann daher entsprechend eingerichtet werden, um einen solchen Zeitstempel zu erzeugen, beispielsweise unter Verwendung einer sehr genauen, eingebauten Quarzuhr. Damit hier keine Unsicherheitsfaktoren auftreten, wird diese Quarzuhr laufend in geregelten Abständen über eine Netzverbindung geeicht. Zusätzlich kann noch vorgesehen sein, dass das Stattfinden dieses Eichvorganges von einer sogenannten "Watch-Dog"-Software überwacht wird, die gegebenenfalls Maßnahmen, beispielsweise das Sperren der Signaturfunktion der Signierungseinheit, ergreift, falls dieser Eichvorgang ausbleibt.

Es kann aber auch sein, dass die eindeutige Kennung eine Zufallszahl ist, die beispielsweise mit der Speicher- bzw. Chipkarte zur Erstellung der digitalen Signatur unter Verwendung des auf der Chipkarte befindlichen Prozessors und Zufallsgenerators erzeugt wird.

Um das erfindungsgemäße Verfahren zusätzlich gegen Manipulationen und Störungen abzusichern und zu verhindern, dass Nichtberechtigte Einblick in den Kaufvertrag erlangen, ist es von Vorteil, wenn der elektronische Kaufvertrag zu dem Käufer und/oder zu der Abrechnungsstelle bzw. zu und/oder von der Time-Stamp-Authority in verschlüsselter Form übertragen wird. Beispielsweise wird dabei eine Verschlüsslung nach einem SSL-Verfahren ("Secure Socket Layer") verwendet, es sind aber auch andere Verschlüsselungsverfahren anwendbar.

Der elektronische Vertrag kann bei der Erfindung in einem beliebigen Datenformat erzeugt werden, beispielsweise in einem Sprach- oder Textdatenformat.

Zweckmäßigerweise wird der elektronische Vertrag in der Abrechnungsstelle archiviert. Bei Rechtsstreitigkeiten kann dieser Vertrag dann jederzeit als Beweismittel herangezogen werden. Da es sich bei der Überprüfung, Archivierung, Weiterleitung der elektronischen Verträge etc. um sensible rechtsgeschäftliche Themen handelt, ist es vorteilhaft, wenn die Abrechnungsstelle von einem sogenannten "Trusted Service Provider" betrieben wird, der auch Kundendaten verwalten kann.

Im folgenden ist die Erfindung an Hand der Zeichnung näher erläutert. In dieser zeigen
Fig. 1 eine schematische Ansicht der Infrastruktur zum Durchführen eines erfindungsgemäßen Verfahrens unter Verwendung eines Datennetzes, und
Fig. 2 eine schematische Darstellung eines beispielhaften Ablaufes eines erfindungsgemäßen Verfahrens.

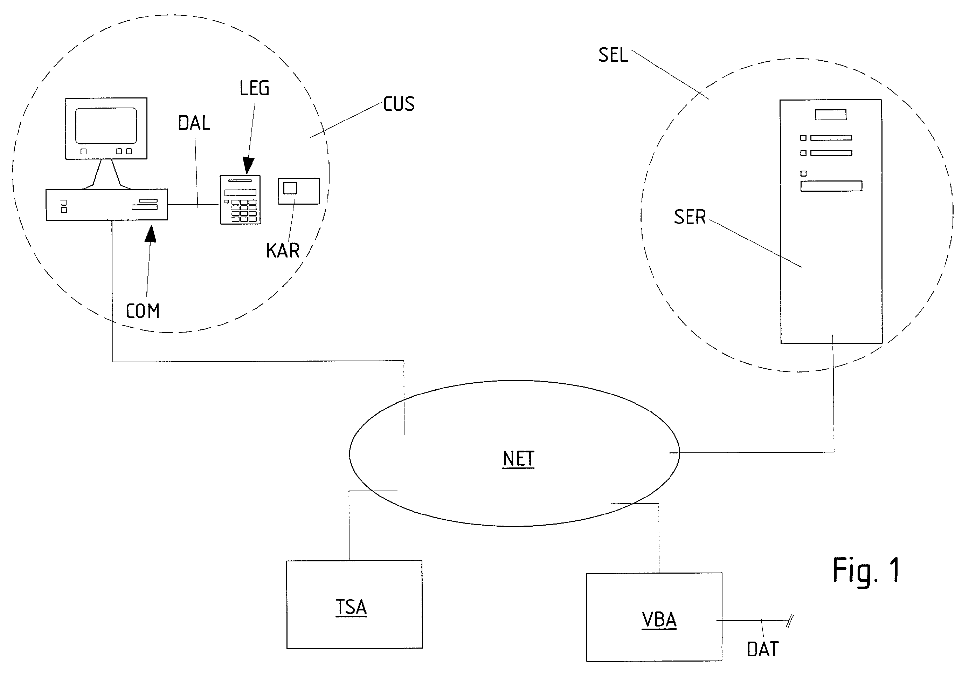

In der Fig. 1 is zur näheren Veranschaulichung der Erfindung einerseits die Käuferseite CUS und auf der anderen Seite die Verkäuferseite SEL dargestellt, die bei der gezeigten vorteilhaften Ausführungsform der Erfindung über Datenleitungen, insbesondere über das Internet NET miteinander verbindbar sind. Bei der gezeigten Ausführungsform ist dabei die Käuferseite CUS mit einem Computer COM, beispielsweise einem Personalcomputer an das Internet angeschlossen. Auf der Verkäuferseite SEL ist ein Computerserver SER dargestellt, und es wird im folgenden davon ausgegangen, dass dieser Server SER dazu eingerichtet ist, die für die Erfindung notwendigen, im weiteren beschriebenen Schritte auszuführen. Bei einer realitätsnahen Ausführung der Erfindung kann es sich dabei durchaus um mehrere, auch miteinander vernetzte, Computer handeln, von denen jeder eigene Aufgaben erfüllt. Weiters ist gemäß der Fig. 1 an das Internet NET noch eine Abrechnungsstelle VBA, beispielsweise ein sogenanntes "Payment-Gateway" dargestellt, welches seinerseits über nicht näher spezifizierte Datenleitungen DAT beispielsweise mit Bankinstituten verbunden ist.

Die Erfindung geht davon aus, dass wie später noch genauer erläutert, unter Verwendung eines auf einer Speicher- bzw. Chipkarte KAR abgelegten Schlüssels rechtsgültig Verträge unterschrieben werden und auf diese Weise rechtsgültige Geschäfte abgeschlossen werden können. Dazu ist es notwendig, über eine Signierungseinheit, beispielsweise ein Kartenlesegerät LEG zu verfügen, welches dazu eingerichtet ist, die Chipkarte KAR zu bedienen und an Hand der darauf gespeicherten digitalen Schlüssels eine digitale Signatur zu erzeugen, die eindeutig einer bestimmten Person zugeordnet werden kann. Gemäß der Fig. 1 is dieses Kartenlesegerät LEG, im folgenden manchmal auch "Signator" genannt, über eine Datenleitung DAL mit dem Computer COM verbunden. Insbesondere bei neueren Computermodellen kann es aber durchaus auch denkbar sein, dass diese Signierungseinheit bereits im Computer integriert ist, was natürlich am grundsätzlichen Erfindungsgedanken nichts ändert.

Auf Verkäuferseite SEL werden nun Waren, Dienstleistungen etc. je nach Verkäufer angeboten. Beispielsweise kann auf dem Computerserver SER eine Internetseite, einer sogenannten WEB- oder Homepage, mit einem sogenannten "elektronischen Shop" laufen, auf die ein potentieller Käufer über das Internet NET zugreifen kann. In diesem elektronischen Shop können von dem Käufer Waren etc. geordert werden, beispielsweise werden verschiedene Waren in einen sogenannten "Warenkorb" gelegt. Hat der Käufer sein Warensortiment in seinem Warenkorb zusammengestellt, teilt er dies dem Käufer beispielsweise durch einen entsprechenden Tastenklick auf der WEB-Page des e-shops mit.

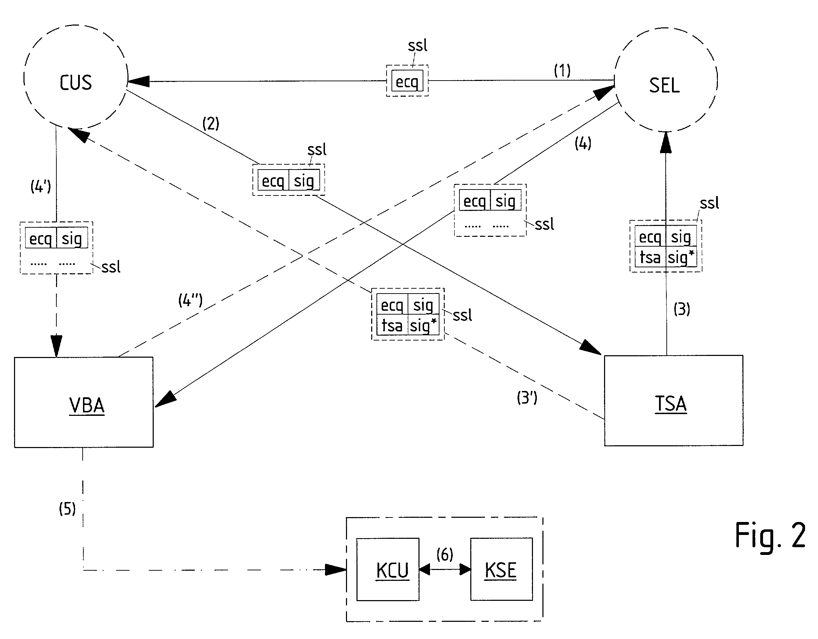

Ein solches Bestellen und auch Kaufen von Waren etc. in e-shops ist vielen Internetbenutzern bekannt. Zu diesem Zeitpunkt tritt nun das Problem der Bezahlung, wie eingangs ausführlich erläutert, auf, und an dieser Stelle setzt auch die Erfindung an. Nachdem der (potenzielle) Käufer CUS dem Verkäufer SEL seinen Kaufwunsch mitgeteilt hat, wird von Verkäuferseite SEL ein entsprechender elektronischer Vertrag ecq erstellt (Fig. 2). Dieser Vertrag enthält verschiedene Informationen, beispielsweise den für die Waren zu bezahlenden Betrag, und zweckmäßigerweise auch noch Informationen über die Formalitäten der "tatsächlichen" Abwicklung der Bezahltransaktion über die Abrechnungsstelle VBA. Diese Informationen können beispielsweise Kontonummern sein, zwischen denen schließlich Geld transferiert wird, es kann sich dabei um eine Einzugsermächtigung für den Verkäufer handeln, sodass dessen Bankinstitut den entsprechenden Betrag bei dem Bankinstitut bzw. Konto des Käufers einfordern kann, etc.

Bei dem Vertrag ecq kann es sich prinzipiell um ein beliebiges Datenformat mit den entsprechenden Informationen handeln, wobei natürlich sichergestellt sein muss, dass diese Informationen für den Käufer CUS auf irgendeine Weise, vorzugsweise optisch, zugänglich sind, sodass er auch weiß, wessen Inhalt der Vertrag ist, den er unterzeichnet. Beispielsweise kann es sich bei dem Vertrag ecq um ein reines ASCII Textformat oder auch um komplexe Fromate wie beispielsweise PDF ("Portable Document Format") handeln.

Der elektronische Vertrag ecq wird nun, wie in Fig. 2 dargestellt, in Schritt (1) von dem Verkäufer SEL über das Internet NET an den Käufer CUS übermittelt. Dabei ist, wie dies in der Figur gezeigt ist, der Vertrag gegen allfällige Manipulationen bzw. gegen ein Abhören mit einer Verschlüsselung ssl versehen. Generell sei hier angemerkt, dass die meisten Übertragungen in dem gezeigten Beispiel mit einer Verschlüsselung ssl erfolgen, dass dies aber für die Erfindung nicht notwendig ist, und dass auch mehrere oder alle Übertragungen unverschlüsselt erfolgen können. Die Verschlüsselungen sind somit vor allem als zusätzliche Sicherheitsmassnahmen zu sehen, sodass Dritte keine Einsicht in die Geschäftstätigkeiten der beteiligten Personen nehmen können. Wenn keine verschlüsselte Übertragung des Vertrages von dem Verkäufer an den Käufer erfolgt, ist es allerdings günstig, wenn der Vertrag mit einer Signatur des Verkäufers versehen ist, sodass der Käufer sicher sein kann, dass der Vertrag ecq während der Übertragung nicht verändert wurde.

Nachdem der Vertrag ecq bei dem Käufer CUS, d. h. auf seinem Computer COM eingelangt, gegebenenfalls entschlüsselt und/oder die Signatur überprüft wurde, und der Vertrag die Zustimmung des Käufers CUS genießt, wird der Vertrag ecq von dem Käufer mit seiner Signatur sig unter Verwendung seiner Signatur-Chipkarte KAR versehen. In Schritt (2) wird der mit der Signatur sig des Käufers CUS unterzeichnete Vertrag an eine Time-Stamp-Authority TSA übermittelt, gemäß der Fig. 2 wiederum in verschlüsselter Form ssl, wenngleich wie oben besprochen dies wiederum nicht unbedingt notwendig ist.

Nachdem der Vertrag ecq von der Time-Stamp-Authority mit einem Zeitstempel tsa versehen wurde, wird der Vertrag gemeinsam mit der Signatur sig des Käufers und dem Zeitstempel an den Verkäufer SEL übermittelt. Nachdem der somit rechtsgültig unterzeichnete Vertrag ecq bei dem Verkäufer SEL eingegangen ist kann dieser bereits für die Auslieferung der bestellten Waren etc. - auf welchen Wegen auch immer - sorgen.

Der Zeitstempel tsa dient dazu, den Vertrag ecq so zu kennzeichnen, dass dieser einzigartig wird und nicht mehrmals eingelöst werden kann. Bei der Time-Stamp-Authority handelt es sich dabei um eine, wie weiter oben schon ausgeführt, ähnliche Institution wie ein Trust-Center, welches für die Ausgabe, Verwaltung etc. von Zertifikaten für Signaturen zuständig ist; die Time-Stamp-Authority vergibt hingegen rechtsverbindliche Zeitstempel, beispielsweise für oben beschriebenen Zweck.

Es existieren allerdings auch noch andere Möglichkeiten, den Vertrag ecq mit einer eindeutigen Kennung zu versehen. Beispielsweise kann der Zeitstempel auch bereits von Verkäuferseite oder von Käuferseite, beispielsweise mit dem Signator LEG, der dazu entsprechend hardwaremäßig ausgerüstet ist, versehen werden. Bei der Kennung muss es sich aber nicht unbedingt um einen Zeitstempel handeln. Grundsätzlich ist auch eine Zufallszahl, wie dies weiter oben bereits eingehender besprochen wurde ausreichend, oder es können auch Kombinationen von einem Zeitstempel und einer Zufallszahl verwendet werden.

Wird der Vertrag ecq bereits von dem Verkäufer SEL oder dem Käufer CUS mit der einmaligen Kennung versehen, so können die Schritte (2) und (3) gemäß der Figur 2 naturgemäß entfallen und der signierte, mit einer Kennung tsa versehene Vertrag ecq kann von dem Käufer CUS unmittelbar an den Verkäufer SEL übermittelt werden.

Falls der Zeitstempel tsa hingegen von der Time-Stamp-Authority TSA erzeugt wird, ist es günstig, wenn der Vertrag ecq - nun versehen mit der Signatur sig des Käufers CUS sowie dem Zeitstempel tsa - zusätzlich noch mit der Signatur sig* der Time-Stamp-Authority TSA versehen wird, damit der Verkäufer SEL sicher sein kann, dass auch bei dieser Übertragung keine Manipulationen an dem Vertrag vorgenommen wurden. Außerdem kann natürlich die Übertragung auch wieder verschlüsselt erfolgen.

Will nun der Verkäufer SEL seinen "Vertrag einlösen", so übermittelt er diesen an eine Abrechnungsstelle VBA gemäß Schritt (4), die dann in Schritt (5) dafür sorgt, dass dem Verkäufer SEL der in dem Vertrag ecq angegebene Betrag gutgeschrieben wird. Beispielsweise wird dazu ein Konto KCU des Käufers mit dem Betrag belastet und dieser einem Konto KSE des Verkäufers gutgeschrieben (6).

Andere Möglichkeiten der Abwicklung des tatsächlichen Zahlungsverkehrs, z. B. über Kreditkartenkauf, sind weiter oben bereits näher erläutert. Diese sind außerdem nicht Thema dieser Erfindung, weshalb an dieser Stelle nicht mehr näher darauf eingegangen werden soll. Allen Abwicklungsmöglichkeiten ist dabei gemeinsam, dass die Ausgangsbasis für den Anstoß des tatsächlichen Zahlungsverkehrs ein rechtsgültig signierter Vertrag ist.

Bei dem oben beschriebenen Verfahren wird der unterzeichnete Vertrag von dem Käufer - eventuell über Umwege - wieder an den Verkäufer rück übermittelt. Eine andere Möglichkeit ist noch in der Fig. 2 skizziert. Anschließend an Schritt (1), in welchem der Vertrag ecq an den Käufer CUS übermittelt wird, versieht dieser den Vertrag ecq mit seiner digitalen Signatur sig und sendet den signierten Vertrag an die Time-Stamp-Authority TSA (2). Der mit dem Zeitstempel tsa und gegebenenfalls mit der Signatur sig* der Time-Stamp-Authority TSA versehene Vertrag ecq wird wieder an den Käufer CUS zurückgesendet (3'), der den Vertrag dann an die Abrechnungsstelle VBA weiterleitet (4'). In diesem Fall ist es wichtig, dass der Verkäufer SEL davon informiert wird, dass der Vertrag rechtsgültig unterzeichnet bei der Abrechnungsstelle VBA eingelangt ist, wovon er dann in einem Schritt (4"), beispielsweise durch eine entsprechende Meldung und/oder die Zusendung des Vertrages bzw. einer elektronischen Kopie des Vertrages, informiert wird.

Natürlich kann es auch bei dieser Variante vorgesehen sein, dass der Vertrag schon von dem Käufer oder dem Verkäufer mit einer eindeutigen Kennung versehen ist. In diesem Fall können die Schritte (2) und (3') des in Fig. 2 gezeigten Ablaufes entfallen.

Wie an Hand der Figuren 1 und 2 gezeigt, ist das erfindungsgemäße Verfahren insbesondere bei der "Kommunikation" über Datenleitungen von Vorteil, wobei hier insbesondere das allseits bekannte Internet zu nennen ist. Natürlich kann es aber auch möglich sein, dass einer oder mehrere der gezeigten Schritte auch auf anderen Wegen ablaufen, etwa dass der Vertrag ecq zwischen dem Käufer und dem Verkäufer über ein Speichermedium wie eine Diskette etc. ausgetauscht wird, wobei der Austausch beispielsweise per Post abläuft.

Über das Internet bzw. Datenleitungen kann die "Übermittlung" des Kaufvertrages so aussehen, dass der Vertrag von einer Seite, etwa dem Verkäufer, zum Herunterladen - beispielsweise auf einer WEB-Page - für die andere Seite, in diesem Fall etwa den Käufer, zur Verfügung gestellt wird. Die Übermittlung kann aber auch unmittelbar von der jeweiligen Seite angestoßen werden, indem beispielsweise der Verkäufer dem Käufer - oder generell der Sender einem Empfänger - den Vertrag per e-mail oder über ein anderes Sendemedium zuschickt.

Nicht zu vergessen sei in diesem Zusammenhang, dass der Vertrag auch beispielsweise in Form einer Kurznachricht, etwa einer "Short Message", wie sie bei Mobilfunkgeräten bekannt sind, übertragen werden kann, da bereits Mobilfunkgeräte existieren, mit denen Chipkarten gelesen und bedient werden können, und somit der Schritt zu einer Erzeugung einer digitalen Signatur nur mehr ein kleiner ist, und so einige oder auch mehrere Schritte des erfindungsgemäßen Verfahrens unter Verwendung von Mobilfunkgeräten ablaufen.

Weiter oben wurde im Rahmen der Beschreibung die Gestalt des Vertrages kurz angesprochen. Wichtig ist in diesem Zusammenhang, dass die Informationen, die in diesem Vertrag enthalten sind, auf irgendeine Weise den beteiligten Parteien zugänglich sind, sodass durch eine Signierung des Vertrages ein rechtsgültiger Vertrag entsteht. Besonders vorteilhaft ist es natürlich, wenn der Vertrag in einem Format vorliegt, das gelesen, unter Umständen zur Archivierung ausgedruckt etc. werden kann. Grundsätzlich wäre es aber auch denkbar, dass die vertragsrelevanten Informationen in dem Vertrag in einer akustischen Form abgespeichert sind, dies mit einem geeigneten Programm dem Empfänger des Vertrages, etwa dem Käufer, vorgespielt und dann von diesem unterzeichnet wird, falls der Käufer mit dem Vertragsinhalt einverstanden ist.

Abschließend sei auch noch darauf hingewiesen, dass mit einer solchen Signaturchipkarte gemäß der Erfindung auch das bargeldlose Bezahlen an Kassensystemen, wie es bisher etwa mit Bankomatkarten bekannt ist, durchgeführt werden kann, wie dies eingehend bereits in der Beschreibungseinleitung erläutert wurde.

## Patentansprüche

1. Verfahren zum elektronischen Bezahlen,
**dadurch gekennzeichnet, dass**
a) einem Käufer ein elektronischer Kaufvertrag (ecq) übermittelt wird,
b) der elektronische Vertrag (ecq) zumindest von dem Käufer (CUS) digital signiert wird, und
c) der so signierte Vertrag (ecq, sig) an eine Abrechnungsstelle (VBA) übermittelt wird.

2. Verfahren nach Anspruch 1, **dadurch gekennzeichnet, dass** der Vertrag (ecq) zumindest Informationen betreffend den zu bezahlenden Betrag enthält.

3. Verfahren nach Anspruch 1 oder 2, **dadurch gekennzeichnet, dass** der Vertrag (ecq) zumindest Informationen betreffend zumindest eine Bezahlungsmodalität enthält.

4. Verfahren nach einem der Ansprüche 1 bis 3, **dadurch gekennzeichnet, dass** der zumindest von dem Käufer (CUS) signierte Vertrag (ecq, sig) nach Schritt b) an den Verkäufer (SEL) und von diesem in Schritt c) an die Abrechnungsstelle (VBA) übermittelt wird.

5. Verfahren nach einem der Ansprüche 1 bis 4, **dadurch gekennzeichnet, dass** die Übermittlung des Vertrages (ecq) zu dem Käufer (CUS) und/oder die Übermittlung des signierten Vertrages (ecq, sig) an die Abrechnungsstelle (VBA) über Datenleitungen (NET) durchgeführt wird.

6. Verfahren nach einem der Ansprüche 1 bis 5, **dadurch gekennzeichnet, dass** vor Schritt b) der elektronische Vertrag (ecq) mit einer einmaligen und/oder eindeutigen Kennung versehen wird.

7. Verfahren nach Anspruch 6, **dadurch gekennzeichnet, dass** als Kennung ein elektronischer Zeitstempel (tsa) verwendet wird, welcher dem elektronischen Vertrag (ecq) beigefügt wird.

8. Verfahren nach Anspruch 7, **dadurch gekennzeichnet, dass** der Zeitstempel (tsa) von einer zentralen "Time-Stamp-Authority" (TSA) erzeugt und dem Kaufvertrag (ecq) anschließend beigefügt wird.

9. Verfahren nach Anspruch 8, **dadurch gekennzeichnet, dass** der Kaufvertrag (ecq) von dem Käufer (CUS) signiert, anschließend an die "Time-Stamp-Authority" (TSA) übermittelt und nach erfolgter Zeitstempelung (tsa) wiederum mit einer Signatur versehen an den Käufer (CUS) bzw. Verkäufer (SEL) rückgesendet wird.

10. Verfahren nach einem der Ansprüche 1 bis 9, **dadurch gekennzeichnet, dass** zur Erzeugung der digitalen Signatur (sig) des Käufers (CUS) eine Speicher- bzw. Chipkarte (KAR) verwendet wird.

11. Verfahren nach Anspruch 7 und 10, **dadurch gekennzeichnet, dass** für die Erzeugung des Zeitstempels (tsa) eine Signierungseinheit (LEG) für die Speicher- bzw. Chipkarte (KAR) verwendet wird.

12. Verfahren nach Anspruch 6, **dadurch gekennzeichnet, dass** die Kennung eine Zufallszahl ist.

13. Verfahren nach Anspruch 10 und 12, **dadurch gekennzeichnet, dass** die Zufallszahl mit der Speicher- bzw. Chipkarte (KAR) zur Erstellung der digitalen Signatur (sig) erzeugt wird.

14. Verfahren nach einem der Ansprüche 1 bis 13, **dadurch gekennzeichnet, dass** der elektronische Kaufvertrag (ecq) zu dem Käufer (CUS) und/oder zu der Abrechnungsstelle (VBA) bzw. zu und/oder von der Time-Stamp-Authority (TSA) in verschlüsselter Form (ssl) übertragen wird.

15. Verfahren nach Anspruch 14, **dadurch gekennzeichnet, dass** eine Verschlüsslung (ssl) nach einem SSL-Verfahren verwendet wird.

16. Verfahren nach einem der Ansprüche 1 bis 15, **dadurch gekennzeichnet, dass** der elektronische Vertrag (ecq) in einem beliebigen Datenformat erzeugt wird.

17. Verfahren nach Anspruch 16, **gekennzeichnet durch** ein Sprach- oder Textdatenformat.

18. Verfahren nach einem der Ansprüche 1 bis 17, **dadurch gekennzeichnet, dass** der elektronische Vertrag (ecq) in der Abrechnungsstelle (VBA) zumindest archiviert wird.

19. Abrechnungsstelle zur Verwendung in einem Verfahren nach einem der Ansprüche 1 bis 18.
